# EUROPEAN PATENT APPLICATION

(11) **EP 4 624 375 A1**
(43) Date of publication of application: **01.10.2025**
(21) Application number: 24167733.5
(22) Date of filing: 28.03.2024
(51) Int. Cl.: B65G 1/04, B65G 1/137

(54) **CONTAINER HANDLING STATION**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a container handling station for an automated storage and retrieval system comprising a three-dimensional grid in which storage containers are arranged within multi-container frames, and in which the multi-container frames are themselves stacked in storage columns of the three-dimensional grid. The container handling station comprising: a first platform configured to receive a multi-container frame thereon; a storage container receiving area located adjacent to the first area, the storage container receiving area configured to receive storage containers; and an arm configured to move storage containers between the first platform and the second area.

## Description

### TECHNICAL FIELD

The disclosure relates to a container handling station. More particularly, it relates to a container handling station for an automated storage and retrieval system, to a storage system comprising a container handling station, and to a method of controlling a controller handling station.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Known grid-based systems may however be slow and cumbersome to manage or rearrange, and may in some cases have a limited height. For example, it can be slow and inefficient to retrieve containers which are buried deep in the grid. Developments in the design and operation of such grids and associated robots can significantly improve the operation of automated storage and retrieval systems. It would be advantageous to improve the design of such grids and associated robots.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;

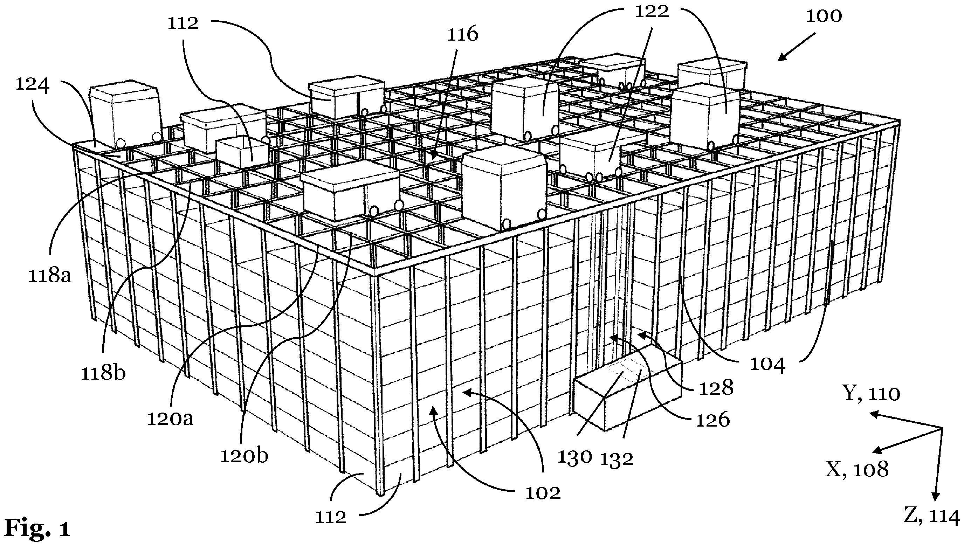

Fig. 1 shows a perspective view of a storage system comprising a grid and a plurality of robotic container-handling vehicles configured to retrieve and/or rearrange goods stored within the grid;

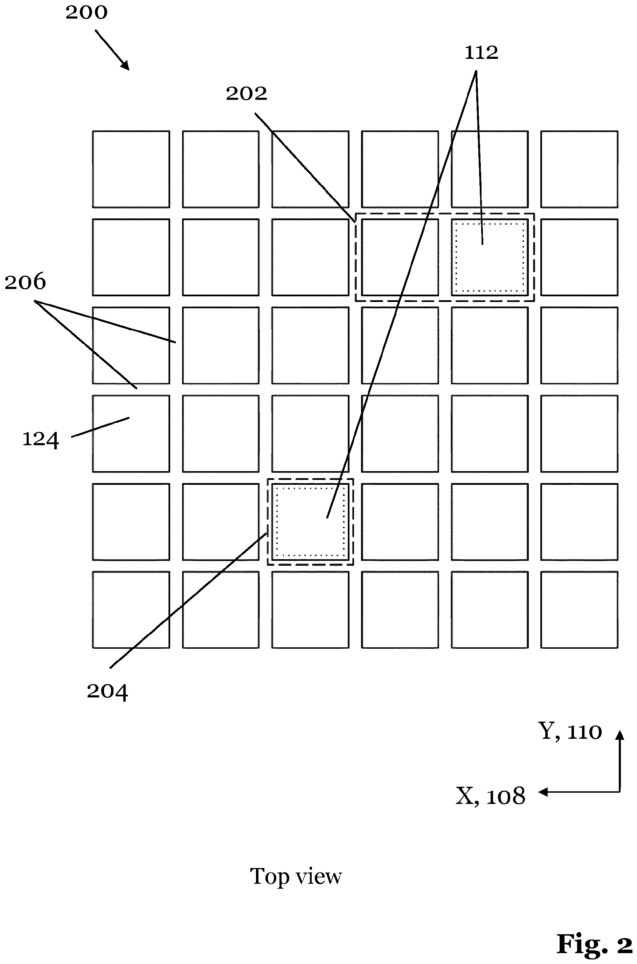

Fig. 2 shows a top view of the system of Fig. 1;

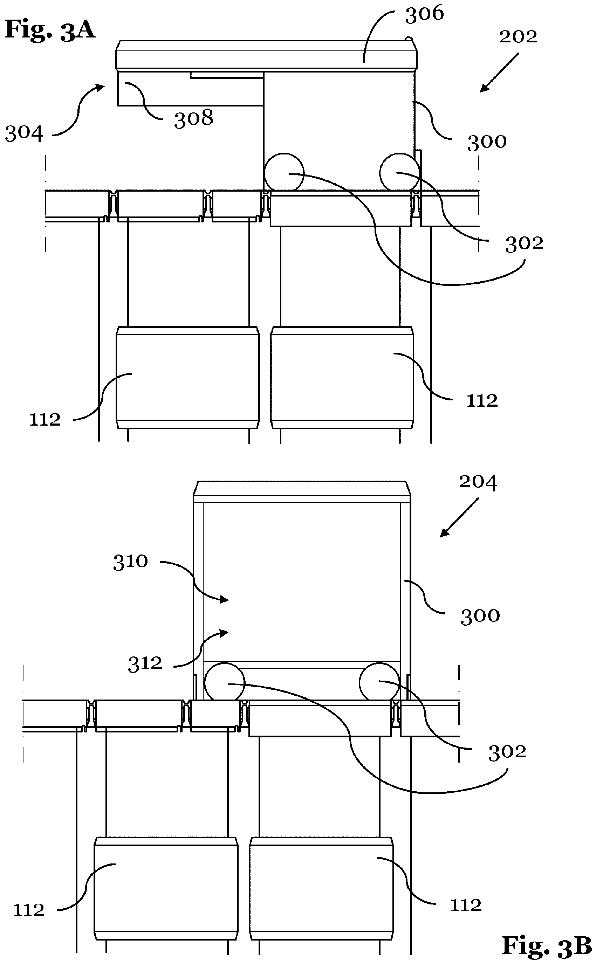

Fig. 3A shows a side view of a first robotic container-handling vehicle suitable for use in the system of Fig. 1;
Fig. 3B shows a side view of a second robotic container-handling vehicle suitable for use in the system of Fig. 1;

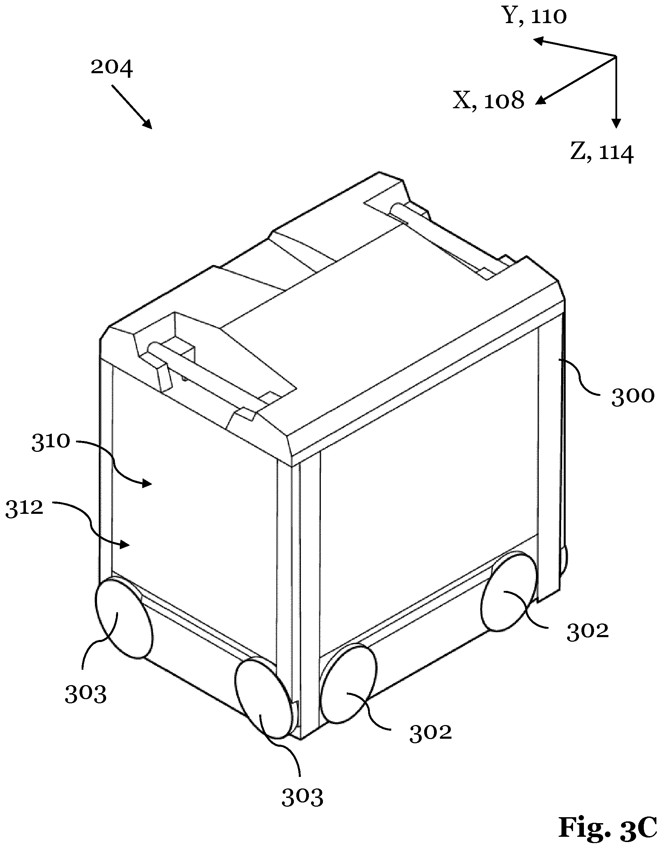

Fig. 3C is a perspective side view of the robot of Fig. 3B;

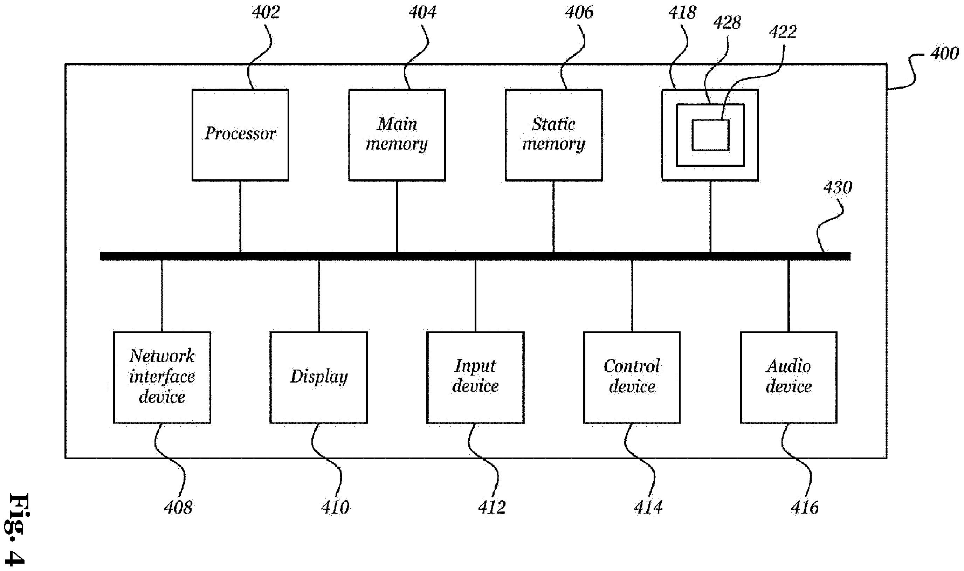

Fig. 4 shows a computing device for implementing the operations described herein;

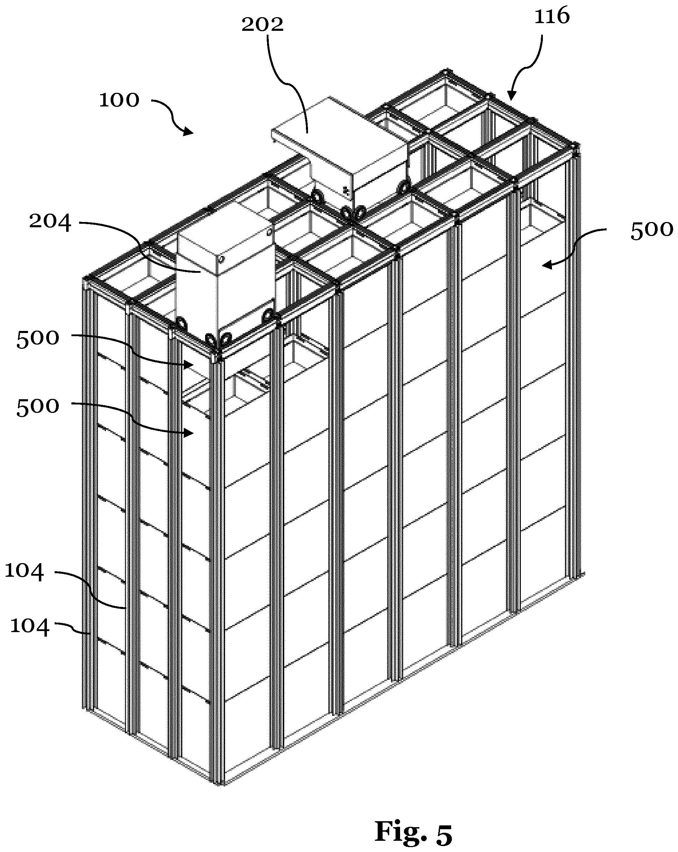

Fig. 5 shows a portion of the grid of Fig. 1 containing multi-container frames;

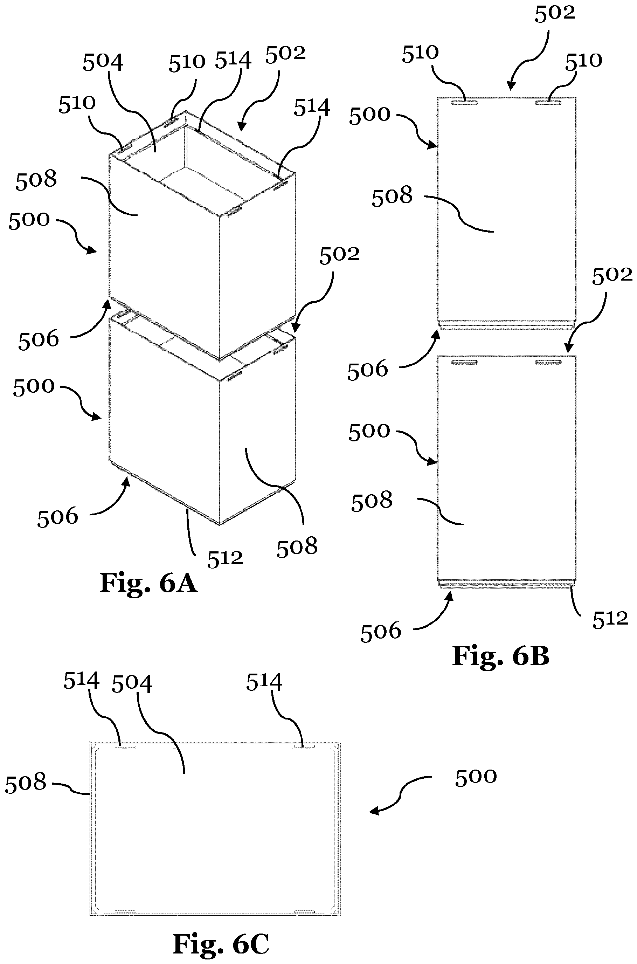

Fig. 6A shows a perspective view of two example multi-container frames;
Fig. 6B shows a side-on view of the example multi-container frames;
Fig. 6C shows a top-down view of the example multi-container frames;

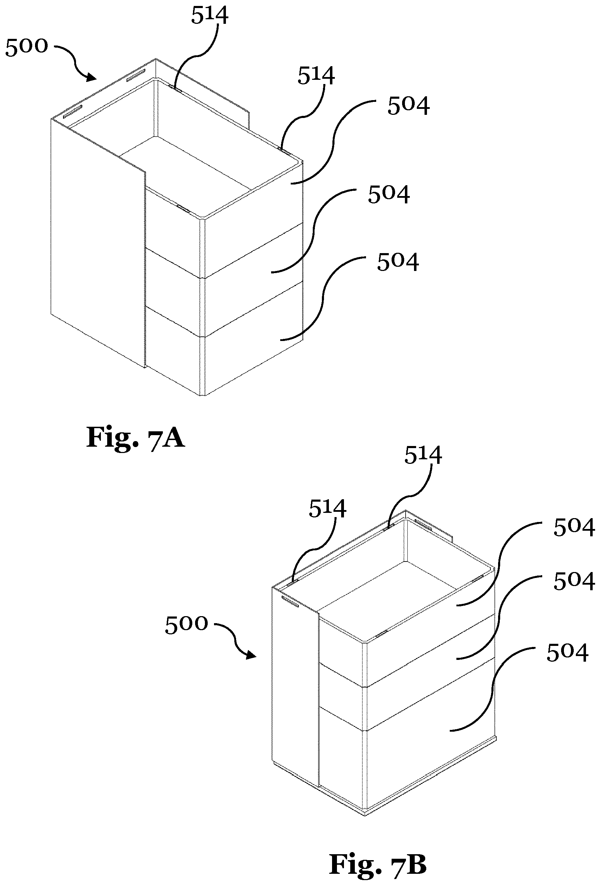

Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;

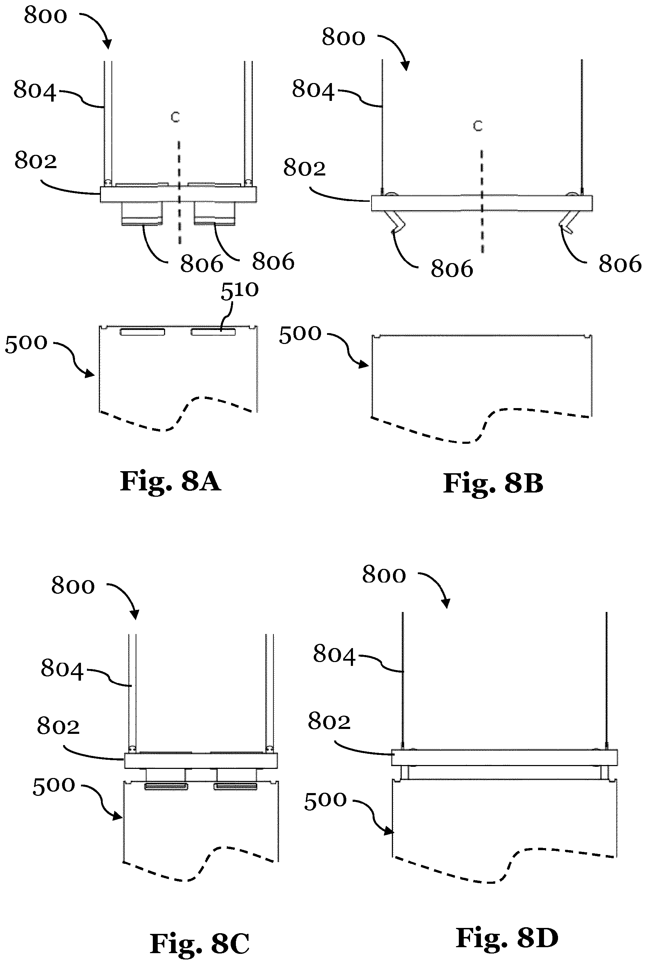

Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;

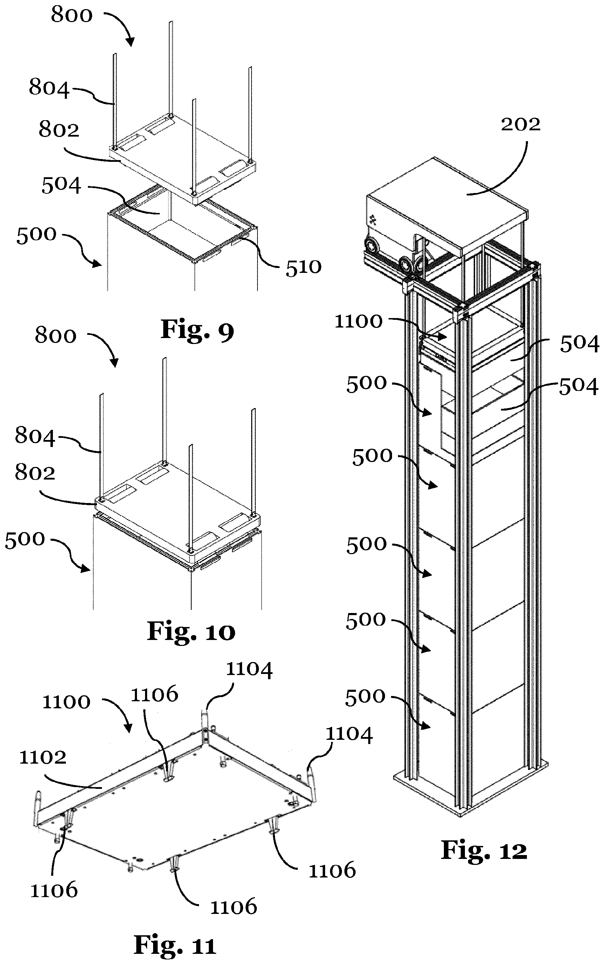

Fig. 9 shows the example lifting device of Figs. 8A-D being lowered into contact with the multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig 12. shows a robotic container-handling vehicle lifting a container out of a multi-container frame;

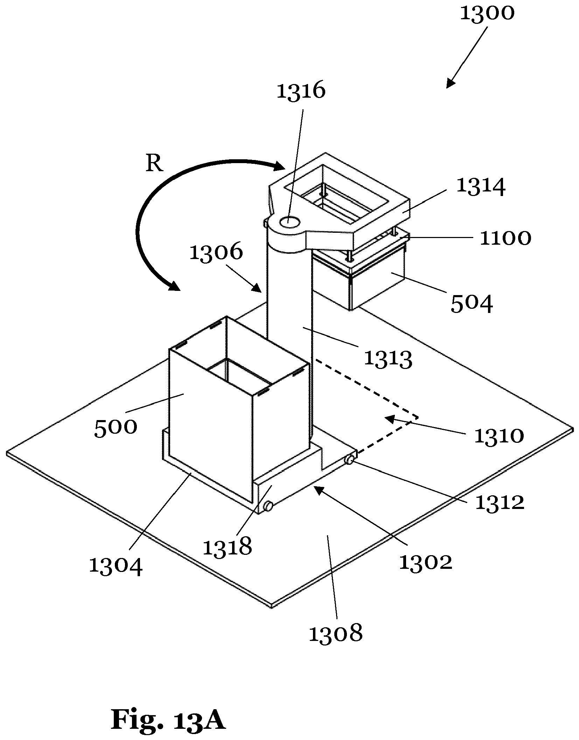

Fig. 13A shows a perspective view of a container handling station according to the present disclosure;

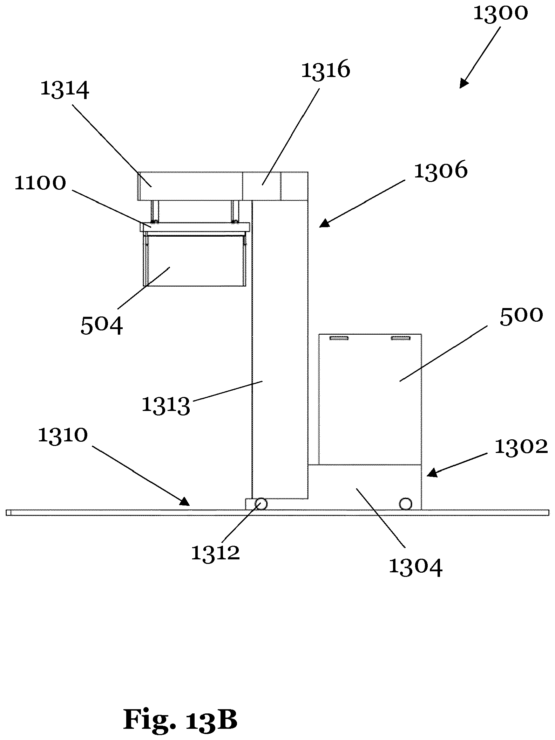

Fig. 13B shows a side view of the container handling station of Fig. 13A;

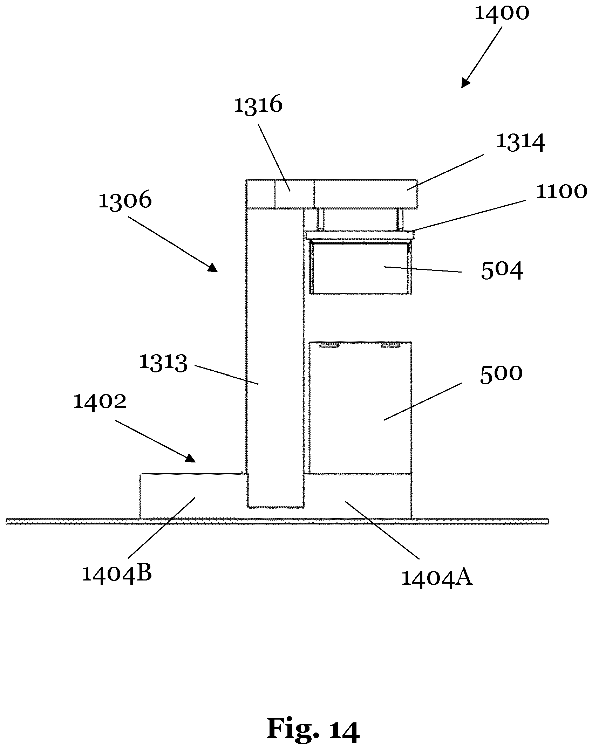

Fig. 14 shows a side view of a further container handling station according to the present disclosure;

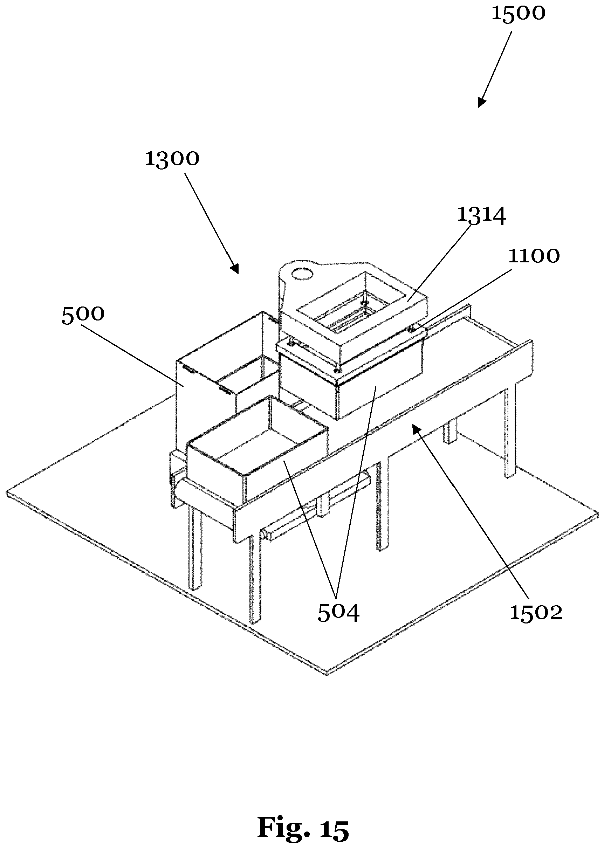

Fig. 15 respectively show a perspective view and a side view of a container handling apparatus which includes the container handling station of Fig. 13;

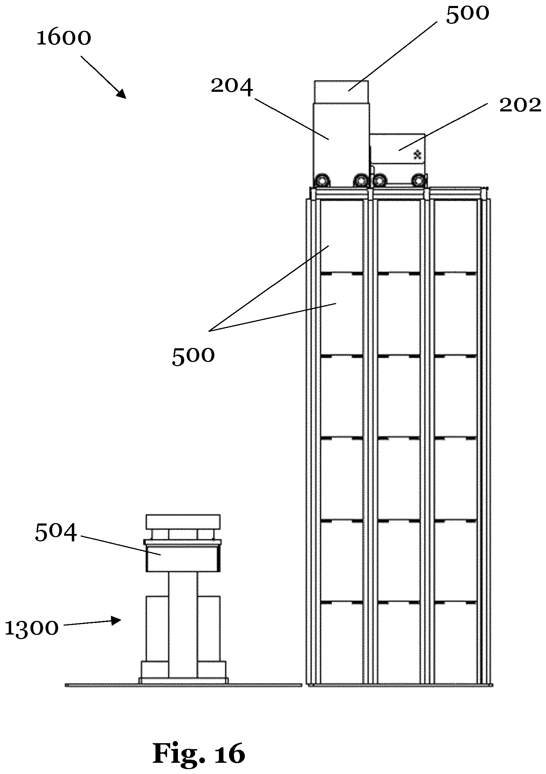

Fig. 16 shows a side view of a storage system which includes the container handling station of Fig. 13;

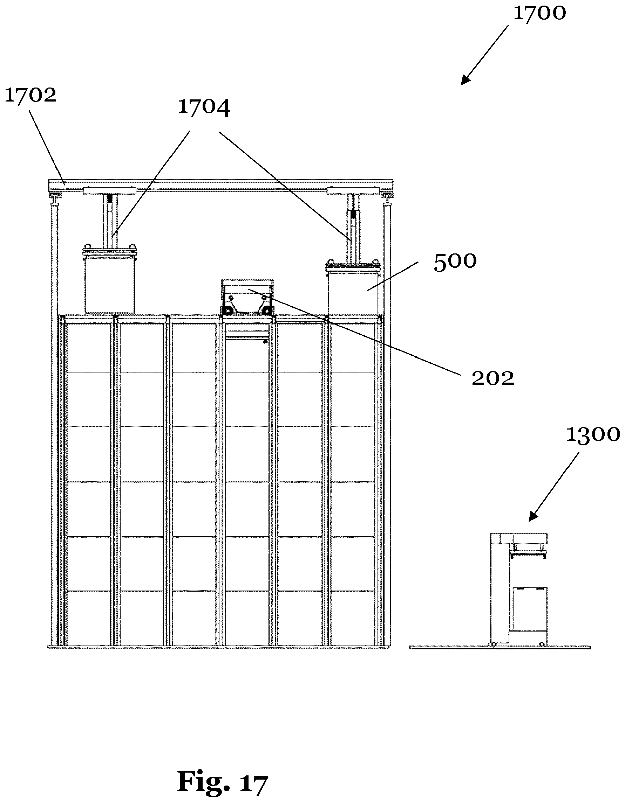

Fig. 17 shows a side view of a further storage system which includes the container handling station of Fig. 13;

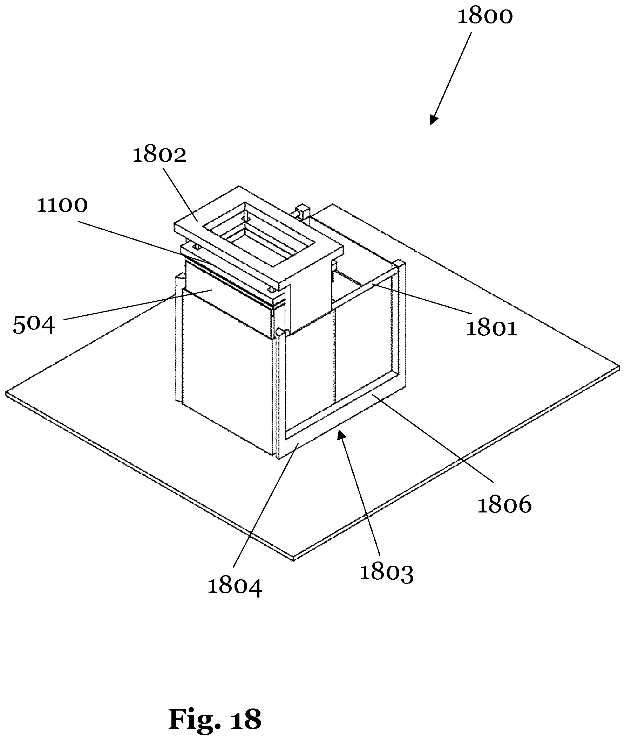

Fig. 18 shows a perspective view of a gantry-based container handling station according to the present disclosure;

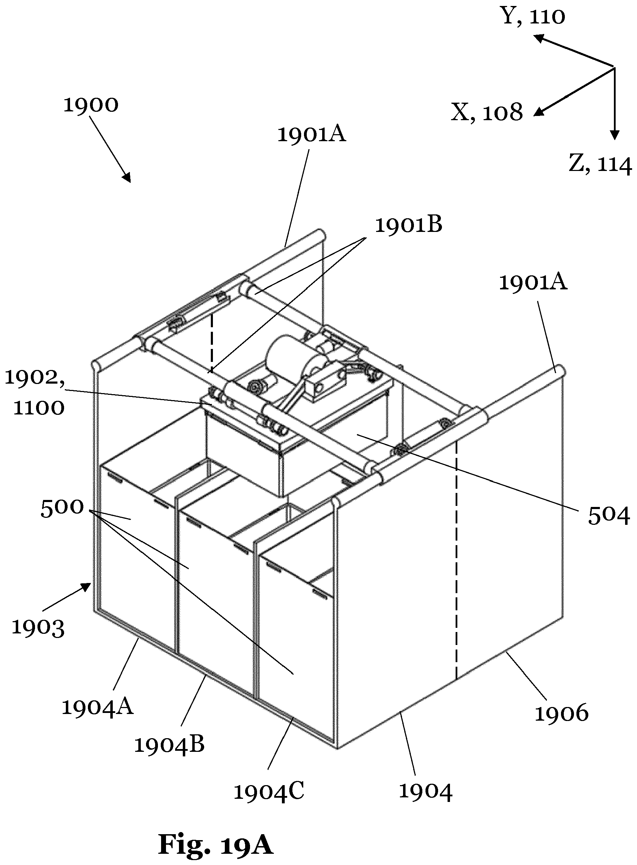

Fig. 19A shows a perspective view of a gantry-based container handling station according to a further example of the present disclosure;

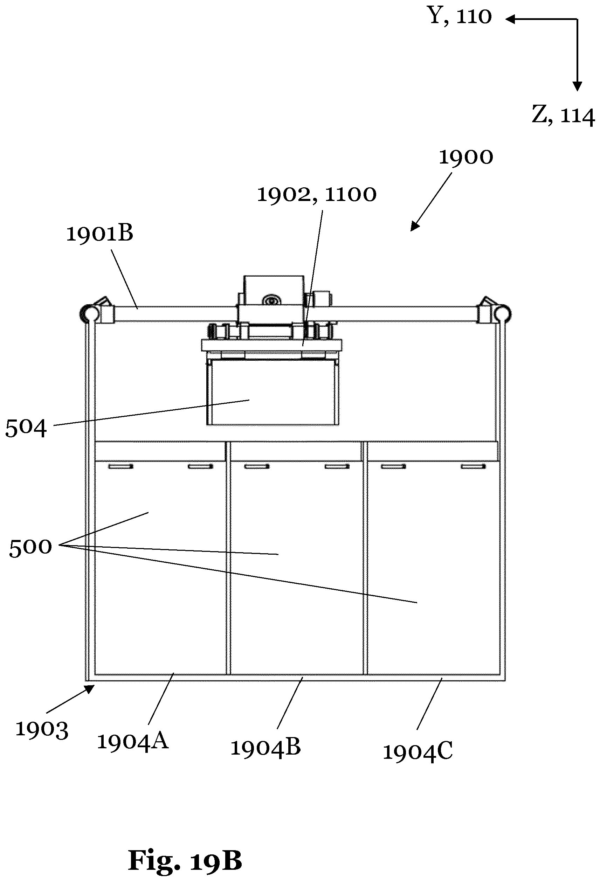

Fig. 19B shows a side view of the gantry-based container handling station of Fig. 19A;

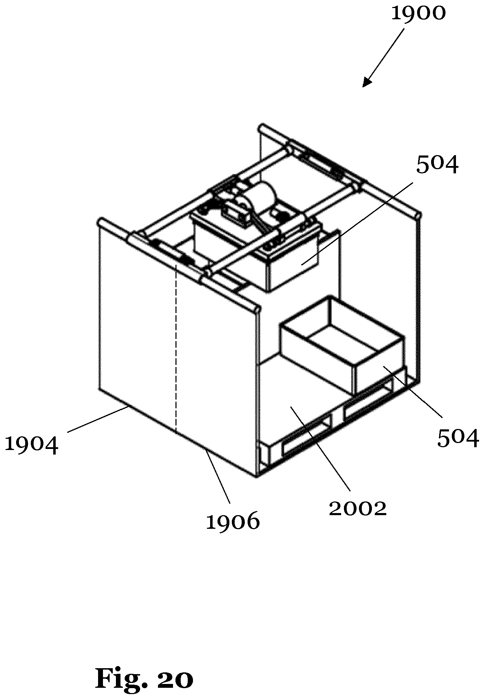

Fig. 20 shows a perspective view of a gantry-based container handling station according to a further example of the present disclosure;

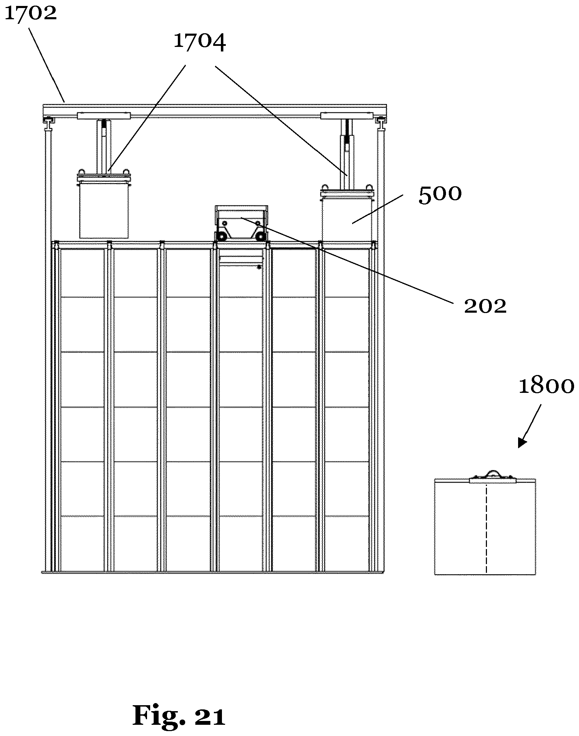

Fig. 21 shows a side view of a storage system comprising a gantry-based container handling station according to Fig. 18;

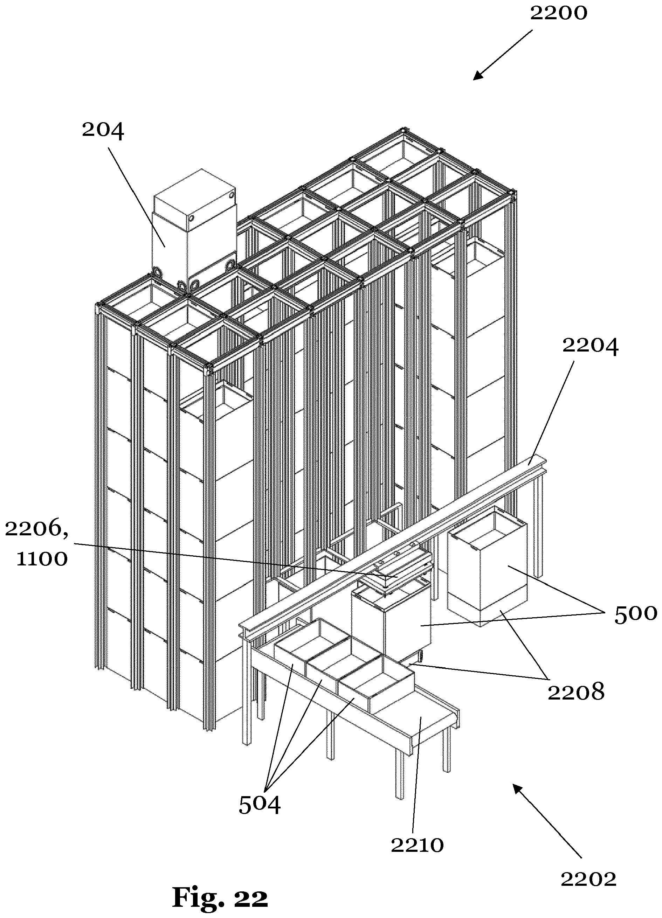

Fig. 22 shows a storage system comprising a further gantry-based container handling station according to the present disclosure; and

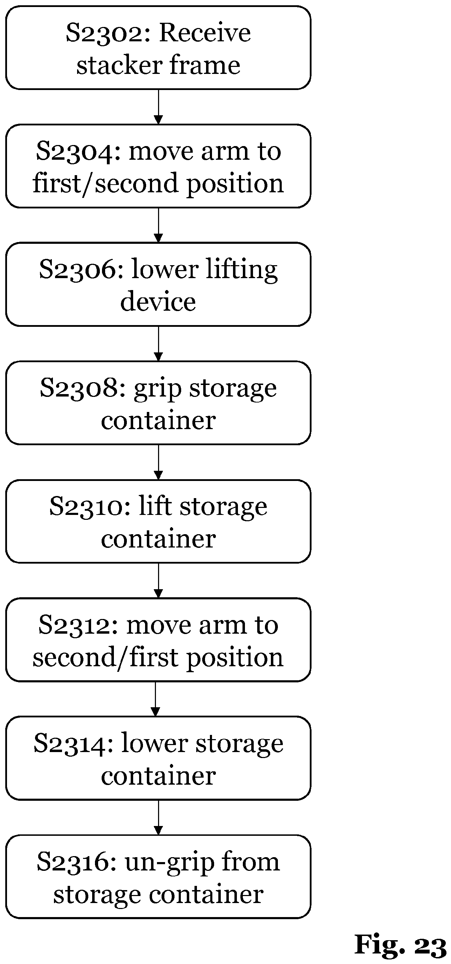

Fig. 23 shows a method according to the present disclosure.

### DETAILED DESCRIPTION

In overview, the present disclosure relates to a container handling station for use with an automated storage and retrieval system which utilises multi-container frames. A multi-container frame is a storage frame which is configured to receive a plurality of storage containers therein, and which is itself configured to stack on top of other multi-container frames. The container handling station of the present disclosure is configured to facilitate the handling of storage containers and multi-container frames from a location adjacent to an automated storage and retrieval system which is itself configured to store stacks of multi-container frames. Accordingly, the container handling station according to the present disclosure may facilitate management of the automated storage and retrieval system by filling, emptying, and/or rearranging multi-container frames with storage containers, from the location adjacent to the automated storage and retrieval system. The container handling station comprises a first platform for receiving a multi-container frame from the automated storage and retrieval system thereon, and a storage container receiving area located adjacent the first platform, for receiving storage containers. The container handling station further comprises an arm, for example a robotic arm, for moving storage containers between the first platform and the storage container receiving area. Accordingly, the container handling station can fill a multi-container frame by moving storage containers received at the storage container receiving area to the multi-container frame, and can further empty a multi-container frame received on the first platform by moving storage containers from the multi-container frame to the storage container receiving area. When used in combination with the automated storage and retrieval system, the container handling station can thereby move individual storage containers from a location remote from the automated storage and retrieval system, to the automated storage and retrieval system within stacker frames, and vice versa. As is described in more detail below, the multi-container frames may comprise stacker frames, wherein a stacker frame is a multi-container frame which is configured to receive multiple storage containers therein stacked on top of one another, for example (but not limited to) three storage containers stacked on top of one another.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Multi-container frames

The present disclosure uses multi-container frames, in other words frames or containers that are themselves configured to hold a plurality of storage containers 112. These multi-container frames can be stored and handled in the automated storage and retrieval system of the present disclosure in the same manner as the storage containers 112 referenced above in relation to Fig. 1-4. A multi-container frame may be configured to accommodate between two and six storage containers 112 in a typical implementation, although larger multi-container frames are possible.

In the exemplary examples that follow, the multi-container frames are configured to accommodate a plurality of storage containers 112 within them, stacked on top of one another. In that case, the multi-container frame may be referred to as a "stacker frame" because the storage containers 112 held within it are stacked on top of one another. For simplicity, the remainder of this disclosure will focus on this form of multi-container frame. However, it will be appreciated that in other implementations (not shown in the accompanying Figures), the multi-container frame may accommodate a plurality of storage containers 112 side-by-side or otherwise arranged, and the storage containers 112 may not be stacked on top of one another within the multi-container frame. Accordingly, while the remainder of this disclosure focuses on stacker frames, this is not to be considered as limiting and the present invention relates to any form of multi-container frame configured to accommodate a plurality of storage containers 112 within it. In the description that follows, we will therefore refer to stacker frames 500 and to storage containers 504, wherein the storage containers 504 are configured for placing (e.g. stacking) in the stacker frames 500. As the reader will understand, the storage containers 504 may be the same as storage containers 112.

Turning now to Fig. 5, this figure shows a subsection of the automated storage and retrieval system shown in Fig. 1. A portion of the grid 100 can be seen together with robotic container-handling vehicles, robotic vehicles, or robots 202, 204 operating on the rail system 116. In the system shown in Fig. 5, multi-container frames 500 are stacked on top of each other in each column of the grid. As noted above, in this implementation the multi-container frames 500 are all stacker frames 500, in which storage containers 112 are stored one on top of the other. Accordingly, for simplicity, the phrase "stacker frame" will be used hereafter. However, the following description applies to any form of multi-container frame.

As can be seen from Fig. 5, one of the stacker frames 500 is in the process of being lifted by robot 204. This is performed in a similar manner as discussed above in relation to the containers 112 of Fig. 1. Further details of how stacker frames 500 are lifted will be described below.

Example stacker frames 500 are shown in more detail in Figs. 6A to 6C. Each of the stacker frames 500 has an open top end 502 for allowing a storage container 504 to pass into the stacker frame 500. As already noted, each stacker frame 500 is configured to accommodate a plurality of storage containers 504 stacked one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Figure 1. For example, the stacker frame 500 may be specifically configured for storing a plurality of storage containers 504, for example up to three storage containers 504, therein in a stacked arrangement.

Each stacker frame 500, comprises a bottom end 506, for supporting a lowermost storage container 504. In the present example, side walls 508 extend between the bottom end 506 and the top end 502, although in other examples stacker frame 500 may simply comprise a framework defining the frame within which the containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses enable the stacker frames 500 to be placed into and lifted out of a storage column of the grid, as will be described in further detail below.

To facilitate efficient storage and enable stacker frames 500 themselves to be stacked, the bottom end 506 of each stacker frame 500 may have a recessed portion 512 having an outer periphery being smaller than, i.e. configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Figure 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

Figs. 7A and 7B show stacker frames 500 with a cut-away section to better illustrate the stacking of the storage containers 504 inside the stacker frame 500. The stacker frame 500 shown in Fig. 7A has three evenly sized storage containers 504, whereas in the stacker frame 500 shown in Fig. 7B the lowermost storage container 504 is larger in height than the other storage containers 504. The number, shape and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary bins or containers 112. A variety of modifications may be made to the container-handling vehicles 202, 204 to enable them to better interact with stacker frames 500 and the containers 504 stored within stacker frames. Some example implementations detailing such modifications will now be described, however it will be appreciated that other mechanisms maybe provided additionally or alternatively.

Figs. 8A, 8B, 8C, 8D, 9 and 10 show an example lifting device 800 to enable container-handling vehicles 202, 204 to lift stacker frames 500. The lifting device 800 may be provided as the lifting device 304 of container-handling vehicle 202 or the lifting device 312 of container-handling vehicle 204. It may also be used in the lifting device of any of the robots 1300, 1600, 1800, 1900 and 2000 described below. The lifting device 800 is configured to engage with a stacker frame 500 such that the stacker frame 500 may be lifted or lowered into or out of a column 102 of the grid 100.

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches 806 are an example implementation of a gripping device, such as gripping device 308 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. It may also be used in the lifting device of any of the robots 1300, 1800, 1900 and 2000 described below. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the top most stacker frame 500 by container-handling vehicle 202.

To enable a storage container 504 to be retrieved from a stacker frame 500 in this way, the lifting frame 1102 has an outer periphery configured to fit within an inner periphery of the side walls of the stacker frame 500. The inner periphery of the side walls of the stacker frame 500 may be configured to guide the lifting frame 1102 when within the stacker frame 500.

Example lifting mechanisms to enable a container-handling vehicle to lift a stacker frame 500 or container 504 from a stacker frame have been described with reference to Figs. 8A-12. However, it will be appreciated that these mechanisms are merely exemplary. Other mechanisms can be used, and both stacker frames 500 and containers 504 may be modified appropriately to accommodate an alternative form of lifting mechanisms.

### Description of specific improvements - container handling station

Fig. 13A shows a perspective view of a container handling station 1300, for use with an automated storage and retrieval system configured to accommodate, process and sort stacker frames 500 according to Figs. 5-12. Fig. 13B shows a side view of the container handling station 1300. As with previous examples, the container handling stations according to the present disclosure are exemplified in the case where the multi-container frame is a stacker frame 500. However, as the reader will understand, the container handling stations according to the present disclosure can alternatively be configured for use with multi-container frames other than stacker frames, e.g. multi-container frames configured for receiving storage containers 504 arranged side-by-side.

The container handling station 1300 comprises a base 1302, which includes a first platform 1304 for receiving stacker frame 500 thereon. The container handling station 1300 further comprises an arm 1306 which extends vertically from the base 1302, and which includes a gripping device 308 or lifting device 1100, for lifting and lowering storage containers 504. In the following description, a lifting device 1100 will be referred to. However, as the reader will understand, a gripping device 308 could alternatively be used. The arm 1306 may be a robotic arm, in that it may be operated by internal motors, and further may be controlled autonomously. In the depicted example, a stacker frame 500 is shown received on the first platform 1304, and a storage container 504 is shown suspended from the lifting device 1100.

The container handling station 1300 is configured for use on the ground 1308, and as such it comprises a storage container receiving area 1310 located at ground level which comprises a region adjacent to the first platform 1304, and level with the first platform 1304 in the vertical (Z) direction, for receiving storage containers 504. In the configuration of Figs. 13A and 13B, the storage container 504 is suspended above the storage container receiving area 1310 by the lifting device 1100.

The base 1302 of container handling station 1300 in Figs. 13A and 13B also comprises wheels 1312, such that the container handling station 1300 is moveable along the ground. However, the wheels 1312 may in some examples be omitted such that the base 1302 sits directly on the ground and such that the container handling station 1300 is not moveable along the ground.

The arm 1306 comprises a vertical post 1313, and a horizontal arm 1314 which extends horizontally from the vertical post 1313 and from which the lifting device 1100 is suspended. The vertical post 1313 is located between the first platform 1304 and the storage container receiving area 1310. The lifting device 1100 is configured to be lifted and lowered relative to the horizontal arm 1314, e.g. by a crane mechanism (not shown in Figs. 13A-13B), thereby lifting and lowering a storage container 504 which is gripped by the lifting device 1100. The horizontal arm 1314 is rotatable through 180° in the horizontal plane relative to the base 1302 between a first position in which the horizontal arm 1314 is located above the first platform 1304, and a second position in which the horizontal arm 1314 is located above the storage container receiving area 1310 (the position shown in Figs. 13A and 13B). The horizontal rotation direction of the horizontal arm 1314 is illustrated by arrow R in Fig. 13A. The horizontal arm 1314 is pivoted about a pivot axis 1316 which is coaxial with the upright post 1313.

The first platform 1304 comprises an engagement surface 1318. The engagement surface 1318 in the depicted example comprises vertical walls which extend upwards from the first platform 1304 and which define a recess for receiving the stacker frame 500. As shown, the spacing between the walls is substantially equal to the corresponding outer dimension(s) of the stacker frame 500, such that the stacker frame is securely received within the recess in a known position relative to the vertical post 1313. The recess is positioned directly below the lifting device 1100 when the horizontal arm 1314 is in the first position. Accordingly, the recess ensures that storage containers 504 can be lifted from the stacker frame 500 when the stacker frame 500 is received in the recess.

In operation, the container handling station 1300 is located adjacent an automated storage and retrieval system configured for storing stacker frames 500 therein, such as the automated storage and retrieval system of Fig. 5, and is located at ground level. A stacker frame 500 is lowered into the recess on the first platform 1304, e.g. by a robot 202 located on the top of the grid, or by a crane suspended above the grid. Once the stacker frame 500 is located in the recess, the horizontal arm can be operated so that it moves to the first position, with the lifting device 1100 located directly above the stacker frame 500. The lifting device 1100 is then lowered so as to grip a storage container 504 within the stacker frame 500. The storage container 504 is then lifted by the lifting device 1100, thereby removing the storage container 504 from the stacker frame 500. The horizontal arm 1314 is then rotated to the second position, such that the lifting device 1100 and the storage container 504 are located above the storage container receiving area 1310. The lifting device 1100 is then lowered, in order to place the storage container down at the storage container receiving area 1310. A method of using a container handling station according to any of the examples herein is described in more detail in Fig. 23 and the accompanying description. As the reader will understand, these steps could alternatively be performed in reverse in order to move a storage container 504 from the storage container receiving area 1310 to the stacker frame 500.

Fig. 14 shows a container handling station 1400 according to a further example of the present disclosure. The container handling station 1400 is similar to the container handling station 1300, save for the fact that the base 1402 comprises both a first platform 1404A for receiving a stacker frame 500 thereon, and a second platform 1404B adjacent the first platform for receiving a storage container 504 thereon. The vertical post 1313 is located between the first platform 1404A and the second platform 1404B. All other components are the same, and so the same reference numerals are used. As with the container handling station 1300, the first platform 1404 is located under the lifting device 1100 when the horizontal arm 1314 is in the first position (the position shown in Fig. 14). Further, the second platform 1420 is located under the lifting device 1100 when the horizontal arm 1314 is moved into the second portion.

Fig. 15 shows a container handling apparatus 1500 according to the present disclosure. The container handling apparatus 1500 comprises the container handling station 1300 according to Figs. 13A and 13B, and further comprises a conveyor belt 1502, which is positioned for receiving storage containers 504 from the horizontal arm 1314 thereon. In the depicted example the conveyor belt 1502 extends horizontally from a first location which is displaced from the storage container receiving area 1310, to a second (different) area which is displaced from the storage container receiving area 1310. As it moves from the first location to the second location, the conveyor belt passes under the horizontal arm 1314 when the horizontal arm is in the second position (as depicted in Fig. 15). Alternatively, the conveyor belt may include a first end which is located at the storage container receiving area 1310, and a second end located at a location away from the container handling station 1300, for example at a collection area for storage containers. The conveyor belt 1502 thereby provides transportation of individual storage containers 504 to the container handling station 1300, or away from the container handling station 1300, as required.

Fig. 16 shows a storage system 1600 comprising an automated storage and retrieval system for stacker frames 500 according to Fig. 5, and a container handling station 1300 located adjacent to the automated storage and retrieval system. Features of the automated storage and retrieval system are the same as have been described in respect of Figs. 5 onwards above, and so will not be repeated here for brevity. As shown, both the automated storage and retrieval system and the container handling station 1300 are standing on ground level. However, the grid is much taller than the container handling station 1300, and as such the upper surface of the grid is located above the upper surface of the container handling station 1300. Stacker frames 500 are lowered down to the first platform 1304 from the grid and/or lifted from the first platform 1304 and up to the grid by vehicle 202, or by a crane located above the grid (crane not shown in Fig. 16). The container handling vehicle 1300 then places storage containers 504 in the stacker frame 500 received on the platform 1304, or removes storage containers 504 from the stacker frame 500 received on the platform 1304, in the manner as has been described above. Accordingly, the container handling station 1300 provides a means for filling, emptying, or rearranging stacker frames 500 from the grid. As the reader will understand, the container handling station 1400, or the container handling apparatus 1500, could alternatively be used in place of the container handling station 1300.

Fig. 17 shows a further storage system 1700, comprising an automated storage and retrieval system according to Fig. 5, and a container handling station 1300 located adjacent to the grid. The storage system 1700 further comprises a gantry system 1702 located above the grid, and two cranes 1704 suspended from the gantry system 1702. Although not shown in Fig. 17, the gantry system further extends above the container handling station 1300, such that the cranes 1704 can deposit stacker frames 500 onto the container handling station 1300. As also shown, a robot 202 can be provided on the grid, for movement of stacker frames 500 and/or storage containers 504. As the reader will understand, the container handling station 1300 in the system 1700 of Fig. 7 could be replaced with container handling station 1400 or container handling station 1500.

Fig. 18 shows a gantry-based container handling station 1800 according to the present disclosure. Rather than an arm which comprises a vertical post and a horizontal arm, the container handling station comprises a gantry which comprises a pair of parallel rails 1801, and an arm 1802 mounted on the pair of parallel rails for movement along the pair of parallel rails, between a first position located above a first platform 1804 for receiving a stacker frame 500 and a second position located above a second platform 1806 for receiving a storage container 504. The container handling station 1800 includes a base 1803 which includes the first platform 1804 for receiving stacker frames 1804, and the second platform 1806 for receiving storage containers. The gantry is mounted to the base 1803. The lifting device 1100 is suspended from the arm 1802, for moving storage containers 504 between the first platform 1804 and the second platform 1806. In the depicted example, a storage container 504 is shown suspended from the lifting device 1100. In the example of Fig. 18, the arm is moveable in only one horizontal direction along the rails, e.g. the X-direction 108, or the Y-direction 110.

Fig. 19A shows a gantry-based container handling station 1900 according to a further example of the present disclosure. Fig. 19B shows a side-view of the gantry-based container handling station 1900. As with the container handling station 1800 of Fig. 18, the container handling station 1900 comprises gantry system on which an arm 1902 is mounted for movement along the rails. However, in the example of Figs. 19A and 19B, the gantry system comprises a first pair of parallel rails 1901A extending in the X-direction, and a second pair of parallel rails 1901B extending in the Y-direction. Accordingly, the arm is moveable both in the X-direction 108 along the rails 1901A, and in the Y-direction 110 along the rails 1901B. As before, the arm 1902 comprises lifting device 1100 for moving storage containers 504. The container handling station 1900 comprises a base 1903 to which the gantry is mounted, and which comprises a first platform 1904 and a second platform 1906. The arm is moveable in the X-direction 108 along the first pair of parallel rails 1901A between a first position in which the arm 1902 is located above the first platform, and a second position in which the arm 1902 is located above the second platform.

As shown in Figs. 19A and 19B, the first platform 1904 comprises three regions: a first region 1904A, a second region 1904B, and a third region 1904C. Each region is configured to receive a stacker frame 500 thereon. Therefore, the first platform 1904 can store up to three stacker frames 500 at once. Accordingly, the arm 1902 can move in the Y-direction along the second pair of parallel rails 1901B between a position located above the first region 1904A, a position located above the second region 1904B, and a position located above the third region 1904C. As the reader will understand, the first platform 1904 could alternatively include fewer than three regions, or more than three regions. Each region comprise a corresponding recess for securely receiving a stacker frame 500 therein at a known fixed location relative to the base 1903 and the gantry. Accordingly, the container handling station is capable of concurrently emptying, filling, or rearranging a plurality of stacker frames 500 at the same time. Moreover, storage containers 504 can be moved between the second platform and any one of the stacker frames 500, or between different stacker frames received on the first platform.

Fig. 20 shows a variation of the container handling station 1900, in which the second platform 1906 is configured to receive a pallet 2002 of storage containers 504 thereon. The pallet 2002 may be manoeuvred onto the second platform 1906 by external means, for example by a forklift truck. The pallet 2002 has storage containers 504 stored on it. Once the pallet 2002 is received on the second platform 1906, the storage containers 504 can be moved from the pallet 2002 and to the first platform 1904 for placement in a stacker frame 500 (or vice versa).

Fig. 21 shows a storage system comprising the further gantry-based container handling station 1800 of Fig. 18. Fig. 21 is similar to the storage system shown in Fig. 17, save for the fact that the container handling station 1300 is replaced with container handling station 1800. Operation of the storage system is the same as described for Fig. 17. As the reader will understand, any of the gantry-based container handling stations 1800, 1900 could be used in the storage system.

Fig. 22 shows a storage system 2200 comprising a further gantry-based container handling station according to the present disclosure. The storage system 2200 comprises a grid, on which a robot 204 is arranged to travel on rails 118, 120. Stacker frames 500 are stored in the grid. A gantry and crane (not shown in Fig. 22) may be provided above the grid for movement of stacker frames 500 to and from the grid, such as a gantry and crane 1702, 1704 as shown in Fig. 17. The storage system 2200 also includes a container handling apparatus 2202 located adjacent to the grid. The container handling apparatus 2202 comprises a gantry 2204 on which an arm 2206 is mounted for movement of storage containers 504, two first platforms 2208 for receiving stacker frames 500 thereon, and a second platform 2210 which comprises a conveyor belt for conveying storage containers 504 from a location under the gantry 2204, to a location distant from the gantry, for example a collection area (now shown in Fig. 22) distant from the gantry. Accordingly, the arm 2206 (which comprises a lifting device 1100) is moveable between a first position located above a first of the first platforms 2208, a second position located above a second of the first platforms 2208, and a third position located above the conveyor belt. Accordingly, storage containers 504 can be moved between each of a stacker frame 500 received at the first of the first platforms 2208, a stacker frame 500 received at the second of the first platforms 2208, and the conveyor belt 2210. The crane arranged above the grid (e.g. according to Fig. 17) is operable to move stacker frames 500 between the grid and either of the first platforms 2208.

Fig. 23 shows a method according to the present disclosure, for example a method of operating a container handling vehicle according to any of the examples provided herein.

At step 2302, it is determined that a stacker frame 500 has been received on the first platform, e.g. deposited on the first platform by a crane.

At step 2304, based on the determination at step 2302, the arm is operated to move to one of the first position and the second position, such that the lifting device 1100 is located over the one of the first platform and the second platform.

At step 2306, the lifting device 1100 is operated to lower towards a storage container 504 received at the one of the first platform and the second platform.

At step 2308, the lifting device 1100 is operated to grip the storage container 504.

At step 2310, the lifting device is operated to lift the storage container 504 from the one of the first platform and the second platform.

At step 2312, the arm is operated to move to the other of the first position and the second position, such that the gripping device 1100 is located over the other of the first platform and the second platform.

At step 2314, the lifting device is operable to lower the storage container 504 to the other of the first platform and the second platform.

At step 2316, the arm is operated to un-grip from the storage container 504, thereby depositing the storage container 504 at the other of the first platform and the second platform.

The method may be performed by a processor located at the container handling station. Alternatively, the method may be performed from a location remote from the container handling station, for example for a central control station of the storage system in which the container handling station is implemented. Instructions maybe provided on a hard drive, such as machine-readable storage media 428, for causing a processor to implement the method of Fig. 23.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A container handling station for an automated storage and retrieval system comprising a three-dimensional grid in which storage containers are arranged within multi-container frames, and in which the multi-container frames are themselves stacked in storage columns of the three-dimensional grid, the container handling station comprising:
a first platform configured to receive a multi-container frame thereon;
a storage container receiving area located adjacent to the first area, the storage container receiving area configured to receive storage containers; and
an arm configured to move storage containers between the first platform and the second area.

2. The container handling station of claim 1, wherein the storage container receiving area comprises a second platform located adjacent to the first platform and configured to receive storage containers thereon, and wherein the arm is configured to move storage containers between the first platform and the second platform.

3. The container handling station of claim 1 or claim 2, wherein the first platform comprises an engagement surface configured to engage an outer surface of a multi-container frame in order to secure the multi-container frame at a fixed position relative to the arm.

4. The container handling station of any preceding claim, wherein the arm comprises a lifting device for lifting and lowering storage containers.

5. The container handling station of claim 4, wherein the arm is moveable between a first position in which the lifting device is located above the first platform, and a second position in which the lifting device is located above the storage container receiving area.

6. The container handling station of claim 5, wherein the arm is rotatable between the first position and the second position.

7. The container handling station of claim 5, wherein the arm is mounted on a gantry and is moveable along the gantry between the first position and the second position.

8. The container handling station of any preceding claim, wherein the second area comprises a conveyor belt for conveying storage containers to a collection area.

9. The container handling station of any preceding claim, wherein the first platform comprises a first region for receiving a first multi-container frame, and a second region for receiving a second multi-container frame, and wherein the arm is configured to move storage containers between the first region and the storage container receiving area, between the second region and the storage container receiving area, and optionally between the first region and the second region.

10. The container handling station of claim 9, wherein the first region is adjacent to the second region in a first direction, and wherein the storage container receiving area is adjacent to the first platform in a second direction which is perpendicular to the first direction.

11. The container handling station of claim 9 or claim 10 when dependent on claim 7, wherein the arm is moveable along the gantry in the first and second directions.

12. A storage system comprising:
a three-dimensional grid for storage of storage containers therein, wherein the storage containers are arranged within multi-container frames, and wherein the multi-container frames are themselves stacked in storage columns of the three-dimensional grid;
a container handling station according to any preceding claim, the container handling station located adjacent to the three-dimensional grid; and
a vehicle or crane configured to transport multi-container frames from the three-dimensional grid to the first platform of the container handling station.

13. The storage system of claim 12, wherein the container handling station is located at ground level and wherein an upper surface of the three-dimensional grid is located above ground level, such that the upper surface of the three-dimensional grid is located above an upper surface of the container handling station.

14. A method of controlling a container handling station according to any of claims 1 to 11, the method comprising:
receiving a multi-container frame on the first platform;
operating the arm to:
lift a storage container from one of the first platform and the storage container receiving area;
move the storage container to the other of the first platform and the storage container receiving area; and
lower the storage container onto the other of the first platform and the storage container receiving area.

15. A computer readable medium having instructions stored thereon, the instructions executable by a processor to cause the processor to perform a method according to claim 14.
